# EUROPÄISCHE PATENTSCHRIFT

(11) **EP 2 277 652 B1**
(45) Veröffentlichungstag und Bekanntmachung des Hinweises auf die Patenterteilung: **12.02.2014**
(21) Anmeldenummer: 10169970.0
(22) Anmeldetag: 19.07.2010
(51) Int. Cl.: B23D 61/02, B23D 61/12

(54) **Sägeblatt mit Zähnen mit einem Spanumformelement**
Saw blade including teeth having a chip deforming element
Lame de scie ayant des dents dotées d'un élément de déformation de copeaux

(30) Priorität: 21.07.2009 DE 102009027896
(43) Veröffentlichungstag der Anmeldung: 26.01.2011
(73) Patentinhaber: WIKUS-Sägenfabrik Wilhelm H. Kullmann GmbH & Co. KG, 34286 Spangenberg (DE)
(72) Erfinder: Kullmann, Dr. Jörg H., 34286, Spangenberg (DE); Carrier, Frank, 34277, Fuldabrück (DE)
(74) Vertreter: REHBERG HÜPPE + PARTNER

(56) Entgegenhaltungen:
- EP-A1- 1 101 558
- DE-A1- 1 628 893
- DE-A1- 4 200 423
- DE-A1-102008 037 407

## Beschreibung

### TECHNISCHES GEBIET DER ERFINDUNG

Die Erfindung betrifft Sägeblatt mit einem Grundkörper und einer Mehrzahl von an den Grundkörper anschließenden Zähnen mit einer Schneide und einer Spanbildungsfläche. Zumindest ein Teil der Zähne ist in einer sich entlang des Grundkörpers wiederholenden Gruppe angeordnet, wobei die Gruppe mindestens drei ungeschränkte Zähne mit unterschiedlichen Breiten aufweist.

Derartige Sägeblätter können insbesondere als langgestrecktes Sägeband mit einer linearen Anordnung der Zähne hintereinander, als Bügelsägeblatt oder auch als Kreissägeblatt ausgebildet sein. Die Zähne bestehen bevorzugt mindestens teilweise aus Hartmetall oder Hartmetalleinsätzen, wodurch sich die das Sägeblatt besonders gut zum Sägen von Metallwerkstoffen eignet.

Die Zähne des erfindungsgemäßen Sägeblatts sind im Sinne einer speziellen Form der Gruppentechnik ausgebildet und angeordnet, gemäß welcher die Gruppe mindestens drei Zähne mit unterschiedlichen Breiten und vorzugsweise auch unterschiedlichen Höhen aufweist. Eine solche Anordnung wird auch als Breiten- und Höhenstufung bezeichnet. Jedem Zahn ist somit ein bestimmter Teil des Schnittkanals zugeordnet. Die Gruppe wiederholt sich entlang der Länge des Sägebands, ggf. unter Zwischenanordnung anderer Zähne. Eine solche spezielle Gruppentechnik ist von der so genannten Vor- und Nachschneidetechnik und auch der einfachen sich wiederholenden Anordnung mit einem ungeschränkten Zahn, einem nach links geschränkten Zahn und einem nach rechts geschränkten Zahn zu unterscheiden.

### STAND DER TECHNIK

Ein Sägeblatt mit einem Grundkörper und einer Mehrzahl von an den Grundkörper anschließenden Zähnen mit einer Schneide und einer Spanbildungsfläche ist aus der deutschen Patentanmeldung DE 42 00 423 A1 bekannt. Die Zähne sind in einer sich entlang des Grundkörpers wiederholenden Gruppe angeordnet, wobei die Gruppe mindestens drei ungeschränkte Zähne mit unterschiedlichen Breiten und Höhen aufweist. Durch diese spezielle Gruppentechnik mit ungeschränkten Zähnen ergibt sich eine besonders hohe Schnittleistung bei einem stabilisierten Geradlauf ohne Gefahr des seitlichen Verlaufens des Sägeblatts, wodurch sich das Sägeblatt von bekannten Sägeblättern mit geschränkten Zähnen oder solchen gemäß der Vor- und Nachschneidetechnik deutlich abgrenzt.

Ein Sägeblatt mit einem Grundkörper und einer Mehrzahl von an den Grundkörper anschließenden Zähnen mit einer Schneide und einer Spanbildungsfläche ist weiterhin aus der deutschen Patentanmeldung DE 100 30 168 A1 bekannt. Die Zähne sind abwechselnd ungeschränkt, nach links geschränkt und nach rechts geschränkt ausgebildet. In diesem Sinne weisen alle Zähne - oder zumindest die geschränkten Zähne - gleiche Breiten und Höhen auf. Jeder der Zähne weist eine gekrümmte Fläche auf, die als Spanumformelement wirkt und von der Schneide abgewandt an die Spanbildungsfläche anschließt. Das Spanumformelement dient zum Erzeugen von Spänen mit einem kleinen Windungsradius.

Ein weiteres Sägeblatt mit einem Grundkörper und einer Mehrzahl von an den Grundkörper anschließenden Zähnen mit einer Schneide und einer Spanbildungsfläche ist aus der europäischen Patentanmeldung EP 1 101 558 A1 bekannt. Jeder der (bezüglich seiner Anordnung in einer Gruppe oder dergleichen nicht näher spezifizierten) Zähne weist ein von der Schneide abgewandt an die Spanbildungsfläche anschließendes Spanumformelement auf. Durch das Spanumformelement werden Späne mit einem kleinen Windungsradius erzeugt.

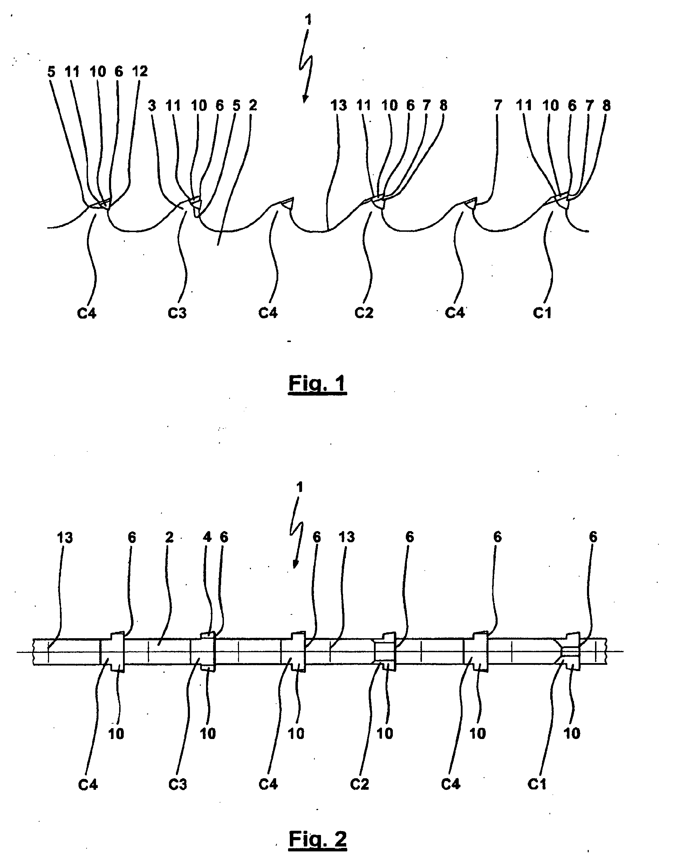

Ein Sägeblatt mit einem Grundkörper und einer Mehrzahl von an den Grundkörper anschließenden Zähnen mit einer Schneide und einer Spanbildungsfläche ist aus der deutschen Patentanmeldung DE 10 2006 015 278 A1 bekannt. Die dort beschriebene Erfindung selbst betrifft die Ausbildung eines Spanumformelements ("flächige Spanleitstufe") an dem Vorsprung des Grundkörpers, d. h. nicht an dem die Spanbildungsfläche bildenden Einsatz des Zahns. In Fig. 1 ist ein Sägeblatt des dortigen Stands der Technik dargestellt, bei dem das Spanumformelement an dem Einsatz des Zahns ausgebildet ist.

### AUFGABE DER ERFINDUNG

Der Erfindung liegt die Aufgabe zugrunde, ein Sägeblatt bereitzustellen, welches die aus der speziellen Gruppentechnik mit ungeschränkten Zähnen unterschiedlicher Breiten bekannte hohe Schnittleistung beibehält, dabei aber eine gute Spankontrolle im Sinne der Erzeugung vergleichsweise kurzer Späne mit einem kleinen Windungsradius realisiert.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Das neue Sägeblatt weist einen Grundkörper und eine Mehrzahl von an den Grundkörper anschließenden Zähnen mit einer Schneide und einer Spanbildungsfläche auf. Zumindest ein Teil der Zähne ist in einer sich entlang des Grundkörpers wiederholenden Gruppe angeordnet, wobei die Gruppe mindestens drei ungeschränkte Zähne mit unterschiedlichen Breiten aufweist. Der breiteste Zahn in der Gruppe weist kein Spanumformelement auf, das von der Schneide abgewandt an die Spanbildungsfläche anschließt. Mindestens ein anderer Zahn in der Gruppe weist ein Spanumformelement auf, das von der Schneide abgewandt an die Spanbildungsfläche anschließt.

In den letzten Jahren haben die Entwicklung und der Einsatz von Aluminiumwerkstoffen in vielen Bereichen der Technik ständig zugenommen. Es besteht daher ein Bedarf an höheren Schnittleistungen beim Sägen von Aluminium, wobei die beim Sägen als langspanend bekannten Aluminiumwerkstoffe zu neuen Herausforderungen bei der Abfuhr der Späne geführt haben.

Beim Sägen insbesondere von Aluminiumwerkstoffen mit Sägeblättern des Stands der Technik mit einer Geometrie im Sinne der speziellen Gruppentechnik ergeben sich sehr dünne, feine, relativ lange Späne mit einem vergleichsweise großen Windungsradius. Derartige Späne neigen zur Bildung von Spannestern und zu Verstopfungen durch Knäuelbildung. Durch diese Späne wird der eigentliche Zerspanungsprozess erschwert und es entstehen Herausforderungen bei der Entfernung und Entsorgung der Späne.

Beim Sägen von Werkstoffen mit einem Sägeblatt des Stands der Technik mit einer Anordnung der Zähne im Sinne der Vor- und Nachschneidetechnik - d. h. mit nur zwei unterschiedlichen Zähnen, nämlich dem Vorschneider und dem Nachschneider - entstehen hingegen weniger Probleme mit der oberhalb beschriebenen Nestbildung. Dieser Vorteil ist jedoch zwingend mit dem systemimmanenten Nachteil kombiniert, dass mit derartigen Sägeblättern deutlich geringere Schnittleistungen realisiert werden können.

Die Erfindung stellt nun eine besonders geschickte neue Kombination der Vorteile der sich bisher ausschließenden Techniken der speziellen Gruppentechnik mit ungeschränkten Zähnen unterschiedlicher Breiten und der Vor- und Nachschneidetechnik dar. Die spezielle Gruppentechnik mit ungeschränkten Zähnen - die dem Fachmann insbesondere anhand der Geometrien "FUTURA" und "FUTURA PLUS" der Anmelderin bekannt ist - realisiert besonders hohe Schnittleistungen bei sehr guter Oberflächenqualität im Schnittkanal aufgrund des stabilisierten Geradlaufs wegen der ungeschränkten Zähne. Die hohen Schnittleistungen resultieren aus der besonderen Aufteilung der wirksamen Schneidenabschnitte auf mehrere Zähne, die so jeweils einem bestimmten streifenförmigen Teil des Schnittkanals zugeordnet sind und nur dort Späne abnehmen. Gleichzeitig realisiert die Erfindung die Erzeugung der bisher nur aus der Vor- und Nachschneidetechnik bekannten vergleichsweise kurzen Späne mit einem kleinen Windungsradius, ohne jedoch die Nachteile der Vor- und Nachschneidetechnik in Kauf nehmen zu müssen.

Erreicht wird diese neue Lösung dadurch, dass mindestens ein Zahn - mit Ausnahme des breitesten Zahns - in der Gruppe ein Spanumformelement aufweist, mit dem die Späne nach deren Bildung durch die Spanbildungsfläche bezüglich ihrer Geometrie umgeformt werden. Die Späne werden dabei derart elastisch-plastisch verformt, dass sie einen kleinen, möglichst konstanten Windungsradius und eine möglichst kurze Länge besitzen. Es handelt sich also insbesondere nicht um Wirrspäne, sondern um kurze Späne, insbesondere kurze Wendelspäne, kurze konische Wendelspäne oder kurze Schraubenspäne. Derartige Späne lassen sich deutlich besser aus dem Schnittkanal entfernen und verhaken sich weniger ineinander, so dass sie beispielsweise in einem 90°-Bogen einer Absauganlage zum Entfernen der Späne aus dem Schnittkanal nicht hängenbleiben.

Die Erfindung hat jedoch nicht nur erkannt, dass ein Spanumformelement einen positiven Einfluss auf die Erzeugung kurzer Späne mit einem kleinen Windungsradius bei einer unverändert großen Schnittleistung des Sägeblatts besitzt, sondern weiterhin, dass besondere Maßnahmen für die Beibehaltung einer guten Oberflächenqualität im Schnittkanal erforderlich sind. Diese besonderen Maßnahmen bestehen nun im Gegensatz zum Stand der Technik erstmals darin, das Spanumformelement nur an bestimmten Zähnen vorzusehen. Genauer gesagt besitzt der breiteste Zahn in der Gruppe kein Spanumformelement. Dieser breiteste Zahn - der auch als Zahn C4 bezeichnet wird - ist für die Oberflächenqualität im Schnittkanal verantwortlich. Üblicherweise handelt es sich bei diesem breitesten Zahn in der Gruppe gleichzeitig um den niedrigsten Zahn in der Gruppe. Der breiteste Zahn in der Gruppe räumt die beiden äußeren Bereiche des Schnittkanals aus und ist somit für die Oberflächenqualität im Schnittkanal verantwortlich. Durch die überraschende Weglassung des Spanumformelements an diesem breitesten Zahn wird nun wirksam verhindert, dass hier die ansonsten gewünschten Späne mit einem kleinen Windungsradius entstehen und zu einem Verkratzen der Oberfläche des Schnittkanals führen. Stattdessen werden hier langgestrecktere Späne erzeugt, die schneller aus dem Schnittkanal entfernt werden und somit die Oberfläche weniger beschädigen.

Vorzugsweise ist der breiteste Zahn in der Gruppe der niedrigste Zahn in der Gruppe. Vorzugsweise weisen auch die anderen Zähne in der Gruppe - mit Ausnahme des breitesten Zahns - jeweils ein Spanumformelement auf. Hierdurch werden wirksam die Späne in der gewünschten gedrungenen Geometrie erzeugt, ohne die Oberflächenqualität im Schnittkanal wesentlich zu beeinträchtigen.

Der Grundkörper kann eine Mehrzahl von Vorsprüngen aufweisen, an denen jeweils ein Einsatz aus einem Material befestigt ist, das härter als das Material der Vorsprünge und des Grundkörpers ist, und so die Zähne gebildet werden, wobei die Schneide und die Spanbildungsfläche an dem Einsatz angeordnet sind. Hierdurch ergibt sich der Vorteil, dass lediglich der Einsatz aus dem eine besondere Härte aufweisenden Werkstoff bestehen muss, während die Anforderungen an den Grundkörper geringer sind. Insbesondere handelt es sich bei dem Material des Einsatzes um Hartmetall.

Bei einer solchen Ausbildung des Sägeblatts mit einer Mehrzahl von Vorsprüngen am Grundkörper und daran insbesondere durch Löten verbundenen Einsätzen ist das Spanumformelement an dem Einsatz angeordnet. Sämtliche Bearbeitungsschritte des Herstellens der Schneide, der Spanbildungsfläche und des Spanumformelements, die insbesondere durch Schleifen realisiert werden, erfolgen somit an den Einsätzen des Sägeblatts.

Das Spanumformelement kann als stufenförmige Fläche ausgebildet sein. Bei dem Spanumformelement handelt es sich insbesondere um eine oder mehrere gekrümmte oder auch gerade Flächen. Das Spanumformelement ist benachbart zu der Spanbildungsfläche angeordnet, wobei die Schneide wiederum benachbart zum anderen Ende der Spanbildungsfläche angeordnet ist. Anders gesagt sind diese Flächen ausgehend von der Schneide in der Reihenfolge Schneide, Spanbildungsfläche, Spanumformelement angeordnet. Es ist dabei aber durchaus möglich, dass weitere Elemente bzw. Flächen zwischengeschaltet sind.

Bei dem Sägeblatt handelt es sich insbesondere um ein Sägeband mit einer linearen Anordnung der Zähne hintereinander, ein Bügelsägeblatt oder ein Kreissägeblatt. Die mindestens drei Zähne in der Gruppe sind ungeschränkt und weisen eine geometrisch bestimmte Schneidenform mit einer Schneidkante auf. Bevorzugt ist die Anordnung von vier Zähnen mit unterschiedlichen Höhen und Breiten, d. h. Zähnen C1, C2, C3 und C4. Andere Anordnungen sind ebenfalls möglich.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht eines Ausschnitts einer ersten beispielhaften Ausfüh- rungsform des neuen Sägeblatts in einer schematisierten Darstellung.
- **Fig. 2**: zeigt eine Ansicht von oben auf das Sägeblatt gemäß Fig. 1.
- **Fig. 3**: zeigt das Sägeblatt gemäß Fig. 1 in einer Ansicht von vorne.
- **Fig. 4**: zeigt eine schematisierte vergrößerte Seitenansicht von zwei Zähnen des neuen Sägeblatts.
- **Fig. 5**: zeigt verschiedene beispielhafte Ausführungsformen der Geometrie eines Zahns des neuen Sägeblatts in einer Seitenansicht.
- **Fig. 6**: zeigt eine Seitenansicht eines Ausschnitts einer zweiten beispielhaften Ausfüh- rungsform des neuen Sägeblatts im Maßstab 1:1.
- **Fig. 7**: zeigt eine Seitenansicht eines Ausschnitts einer dritten beispielhaften Ausfüh- rungsform des neuen Sägeblatts im Maßstab 1:1.
- **Fig. 8**: zeigt eine weitere beispielhafte Ausführungsform des neuen Sägeblatts in einer Ansicht von vorne.
- **Fig. 9**: zeigt eine weitere beispielhafte Ausführungsform des neuen Sägeblatts in einer Ansicht von vorne.

### FIGURENBESCHREIBUNG

**Fig. 1** zeigt eine Seitenansicht einer ersten beispielhaften Ausführungsform des neuen Sägeblatts 1. Es versteht sich, dass Fig. 1 nur einen Ausschnitt aus dem Sägeblatt 1 zeigt, welches sich in der Darstellung der Fig. 1 sowohl nach links und rechts als auch nach unten weiter erstreckt. In Fig. 1 ist das Sägeblatt 1 als langgestrecktes Sägeband ausgebildet. Bei dem Sägeblatt 1 könnte es sich jedoch auch um ein Kreissägeblatt oder ein weniger langgestrecktes Bügelsägeblatt handeln. Das Sägeblatt 1 selbst besteht aus Metall und dient zum Sägen von Metall.

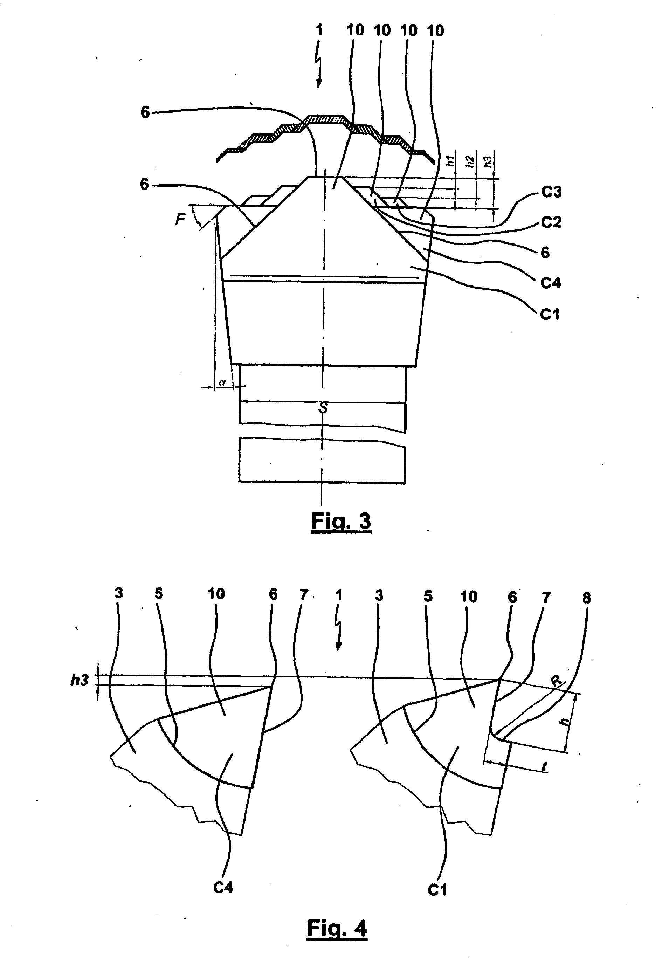

Weitere Ansichten des in Fig. 1 dargestellten Sägeblatts 1 sind in den **Fig. 2** **und** **3** dargestellt. Im Folgenden wird zur Beschreibung der ersten Ausführungsform des Sägeblatts 1 auf diese Fig. 1-3 und zusätzlich auf die **Fig. 4** Bezug genommen, in der die neue Ausbildung des Sägeblatts 1 in einer etwas anderen Darstellung gezeigt ist.

Das Sägeblatt 1 weist einen Grundkörper 2 auf, von dem nur ein Ausschnitt sichtbar ist. Der Grundkörper 2 besitzt eine Mehrzahl von Vorsprüngen 3, an denen jeweils ein Einsatz 4 befestigt ist. Der Einsatz 4 besteht aus einem Material, das härter als das Material der Vorsprünge 3 und des Grundkörpers 2 des Sägeblatts 1 ist. Vorzugsweise handelt es sich bei dem Material des Einsatzes 4 um Hartmetall. Zwischen dem Vorsprung 3 und dem Einsatz 4 ist eine Fügefläche 5 vorhanden, an der der Einsatz 4 mit dem Vorsprung 3 - insbesondere durch Löten - fest verbunden ist.

Der Vorsprung 3 mit dem Einsatz 4 bildet einen Zahn 10 mit einer Schneide 6 und einer Spanbildungsfläche 7. Weiterhin weist jeder Zahn 10 einen Zahnrücken 11, eine Zahnbrust 12, einen Zahngrund 13 und eine Freifläche 14 auf.

Zumindest ein Teil der Zähne 10 ist in einer sich entlang des Grundkörpers 2 wiederholenden Gruppe angeordnet, wobei die Gruppe mindestens drei ungeschränkte Zähne 10 mit unterschiedlichen Höhen und Breiten aufweist. Wie besonders gut in Fig. 3 erkennbar ist, weist die Gruppe im vorliegenden Beispiel vier unterschiedliche Zähne C1, C2, C3 und C4 auf. Bei dem Zahn C1 handelt es sich um den höchsten und schmalsten Zahn 10. Der Zahn C2 ist der zweithöchste und zweitschmalste Zahn 10. Der Zahn C3 ist der dritthöchste und drittschmalste Zahn 10. Der Zahn C4 schließlich ist der niedrigste und breiteste Zahn 10 in der Gruppe. Wie in Fig. 1 dargestellt ist, besteht bei diesem bevorzugten Beispiel die Gruppe aus der Zahnfolge C4-C3-C4-C2-C4-C1. Diese Gruppe wiederholt sich dann im weiteren Verlauf des Sägeblatts 1, wobei es auch möglich ist, andere Zähne 10 zwischenzuschalten und/oder die Anordnung der Gruppe zu variieren. In der Darstellung der Fig. 3 versteht es sich, dass der dort zwischen den Zähnen C2 und C3 angeordnete weitere Zahn C4 nicht sichtbar ist, da er in dieser Darstellung von der Projektion des von vorne gesehen zweiten Zahns C4 abgedeckt wird. Mit einer derartigen Anordnung der Zähne 10 in dieser speziellen Gruppentechnik mit ungeschränkten Zähnen 10 wird eine besonders gute Schnittleistung bei gutem Geradlauf des Sägeblatts 1 erreicht. In Fig. 3 sind weiterhin sind die Winkel α, F sowie die Breite S und die Höhenunterschiede h1, h2 und h3 eingezeichnet.

Neben ihrer Anordnung in der Gruppe weisen die Zähne 10 eine ganz besondere Ausbildung und Anordnung hinsichtlich eines Elements bzw. einer Fläche auf, das bzw. die benachbart zur Spanbildungsfläche 7 angeordnet ist. Mindestens ein Zahn 10 in der Gruppe weist ein Spanumformelement 8 auf, das von der Schneide 6 abgewandt an die Spanbildungsfläche 7 anschließt. Unter dieser Anordnung ist zu verstehen, dass das Spanumformelement 8 von der Spanbildungsfläche 7 aus gesehen nicht in Richtung der Schneide 6, sondern in der anderen Richtung - d. h. in Richtung auf den Zahngrund 13 - angeordnet ist. Das Spanumformelement 8 muss jedoch nicht direkt an die Spanbildungsfläche 7 anschließen. Es ist möglich, andere Flächen oder Elemente zwischenzuschalten. Ebenso kann das Spanumformelement 8 aus mehreren Flächen oder Elementen bestehen.

Das Spanumformelement 8 dient dazu, den während des Sägens durch die Spanbildungsfläche 7 gebildeten Span des Sägeguts hinsichtlich seiner Geometrie umzuformen. Aus diesem Grund wird in dieser Anmeldung der Begriff Spanumformelement verwendet, da es weniger um das ursprüngliche Bilden des Spans, als vielmehr um dessen darauf folgende Umformung geht. Das Spanumformelement 8 könnte auch als Spanumformfläche bezeichnet werden. Das Spanumformelement 8 ist so ausgebildet, dass möglichst kurze Späne mit einem kleinen Windungsradius erzeugt werden. Insbesondere beim Sägen von zur Bildung langer Späne neigen Aluminiumwerkstoffen besteht ansonsten das Problem des Entstehens von Spannestern und des Auftretens entsprechender Schwierigkeiten beim Abtransport der Späne aus dem Schnittkanal. Durch das Spanumformelement 8 werden nun kurze und eng gewundene Späne gebildet, die deutlich weniger Probleme bei ihrer Abfuhr und Entsorgung hervorrufen.

In dem in den Fig. 1-3 dargestellten Ausführungsbeispiel des Sägeblatts 1 weisen die Zähne C1, C2 und C3 jeweils ein derartiges Spanumformelement 8 auf. Der niedrigste und breiteste Zahn 10 in der Gruppe - d. h. hier der Zahn C4 - weist jedoch kein Spanumformelement auf. Der Zahn C4 als breitester Zahn ist letztendlich für die Qualität der Oberfläche im Schnittkanal verantwortlich. Dies ist auch beispielsweise in Fig. 3 erkennbar, wo im oberen Bereich durch die Schraffierung die besondere Aufteilung der wirksamen Schneidenabschnitte auf mehrere Zähne 10 dargestellt ist, die so jeweils einem bestimmten streifenförmigen Teil des Schnittkanals zugeordnet sind und nur dort Späne abnehmen. Das Spanumformelement 8 wurde also nicht am Zahn C4 vorgesehen, um zu verhindern, dass dort (die ansonsten gewünschten) Späne mit einem kleinen Windungsradius entstehen und während des Sägevorgangs zu einem Verkratzen der Oberfläche im Schnittkanal führen.

In Fig. 4 sind die Unterschiede zwischen dem linken Zahn C4 ohne Spanumformelement 8 und dem rechten Zahn C1 mit Spanumformelement 8 besonders gut erkennbar dargestellt. Der Höhenunterschied zwischen diesen Zähnen ist mit h3 bezeichnet. In diesem Beispiel ist die Spanbildungsfläche 8 als eine kreisbogenförmig gekrümmte Fläche mit einem Radius R und einer Tiefe t ausgebildet. Weiterhin ist die Höhe h der Summe aus Spanbildungsfläche 7 und Spanumformelement 8 eingezeichnet.

Die folgende Tabelle gibt an, welche Werte für die Größen h, t und R des Spanumformelements 8 insbesondere und bevorzugt Anwendung finden können:

| **Größe** | **Wertebereich [mm]** | **bevorzugter Wert [mm]** |
|---|---|---|
| h | 0,4-2,0 | 1,0 |
| t | 0,2-2,0 | 1,0 |
| R | 0,2-1,0 | 0,5 |

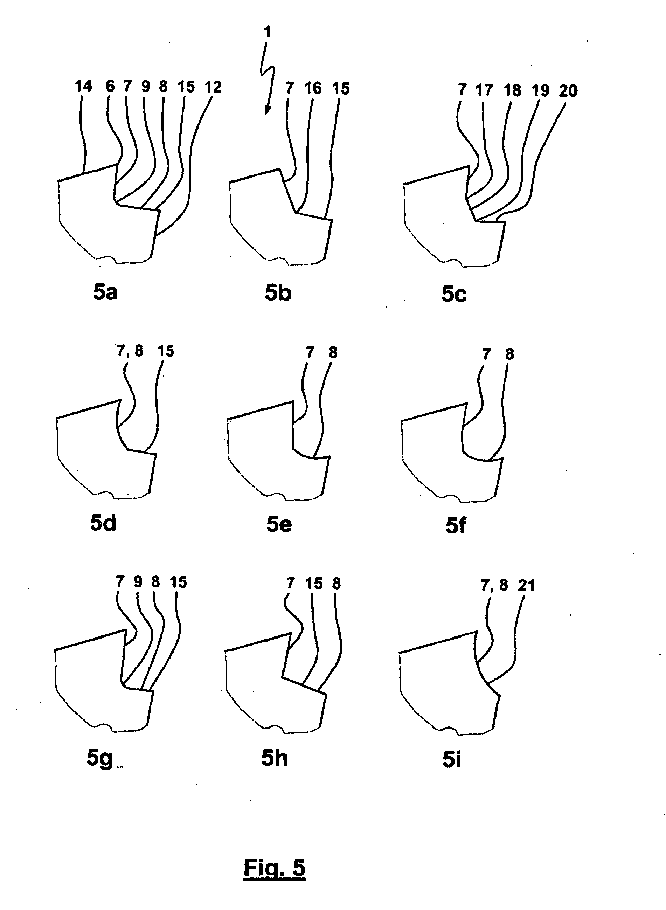

In **Fig. 5** sind verschiedene beispielhafte Ausbildungen der Spitze eines Zahns 10 mit einem Spanumformelement 8 dargestellt. Den unterschiedlichen Ausführungsformen sind dabei die Nummerierung 5a bis 5i zugewiesen. Dargestellt ist jeweils ein Teil der Spitze des Zahns 10 mit einer Freifläche 14, der Schneide 6, der Spanbildungsfläche 7 und der Zahnbrust 12. Wegen der Übereinstimmung der einzelnen Darstellungen gemäß 5a bis 5i wurden aus Übersichtlichkeitsgründen Bezugszeichen teilsweise nur in die erste Fig. 5a eingetragen.

In **Fig. 5a** ist erkennbar, dass das Spanumformelement 8 einen bogenförmigen oder gekrümmten Abschnitt 9 und einen geradlinigen Abschnitt 15 aufweist. Der Winkel zwischen der Spanbildungsfläche 7 und dem geradlinigen Abschnitt 15 des Spanumformelements ist etwas größer als 90°. Die Spanbildungsfläche 7 ist in einem relativ kleinen spitzen Winkel zur Freifläche 14 angeordnet.

Im Unterschied dazu ist die Spitze des Zahns 10 in **Fig. 5b** so ausgebildet, dass das Spanumformelement 8 einen mehr oder weniger (soweit praktisch herstellbar) scharfkantigen Übergangsbereich 16 und den geradlinigen Abschnitt 15 aufweist. Die Spanbildungsfläche 7 ist in einem deutlich größeren Winkel zu der Freifläche 14 angeordnet, wobei der Winkel noch etwas kleiner als 90° ist.

Bei dem in **Fig. 5c** dargestellten Beispiel weist das Spanumformelement 8 anschließend an die Spanbildungsfläche 7 einen ersten Übergangsbereich 17, einen ersten geradlinigen Abschnitt 18, einen zweiten Übergangsbereich 19 und einen zweiten geradlinigen Abschnitt 20 auf.

Bei dem in **Fig. 5d** dargestellten Beispiel der Spitze des Zahns 10 ist die Spanbildungsfläche 7 gekrümmt ausgebildet und stellt eine Kombination der Spanbildungsfläche 7 und des Spanumformelements 8 auf. Das Spanumformelement 8 weist dann weiterhin den geradlinigen Abschnitt 15 auf.

Der in **Fig. 5e** dargestellte Zahn 10 weist stattdessen die geradlinige Spanbildungsfläche 7 und das sich daran anschließende gekrümmte Spanumformelement 8 auf.

In **Fig. 5f** sind sowohl die Spanbildungsfläche 7 als auch das Spanumformelement 8 gekrümmt ausgebildet, wobei der Radius der Spanbildungsfläche 7 deutlich größer als der des Spanumformelements 8 ist.

Bei dem in **Fig. 5g** dargestellten Beispiel der Spitze des Zahns 10 ist die Spanbildungsfläche 7 wiederum geradlinig ausgebildet. Das Spanumformelement 8 weist den gekrümmten Abschnitt 9 sowie den geradlinigen Abschnitt 15 auf, wobei im Unterschied zu der Ausführungsform gemäß Fig. 5a die Tiefe des geradlinigen Abschnitts 15 kleiner gewählt ist.

Bei der beispielhaften Ausführungsform der Spitze des Zahns 10 in **Fig. 5h** schließt sich der geradlinige Abschnitt 15 des Spanumformelements 8 wiederum mehr oder weniger geradlinig an die Spanbildungsfläche 7 an, soweit eine solche Geometrie z. B. durch Schleifen herstellbar ist.

Die in **Fig. 5i** dargestellte beispielhafte Ausführungsform der Spitze des Zahns 10 des Sägeblatts 1 zeigt schließlich die Kombination der Funktionen der Spanbildungsfläche 7 und des Spanumformelements 8 in einer gekrümmten Fläche 21.

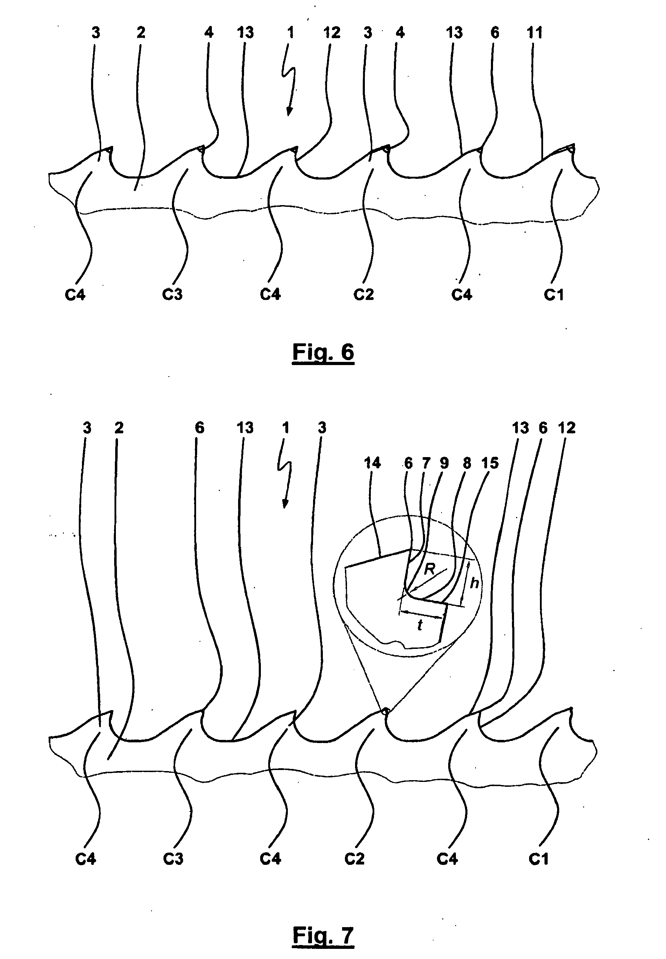

In **Fig. 6** ist eine weitere beispielhafte Ausführungsform des Sägeblatts 1 dargestellt. Im Unterschied zu der in den Fig. 1-3 dargestellten Ausführungsform des Sägeblatts 1 ist dieses hier im Maßstab 1:1 dargestellt, woraus erkennbar ist, dass die Einsätze 4 im Vergleich zu den Vorsprüngen 3 tatsächlich deutlich kleiner sind, als dieses aus Gründen der Verdeutlichung in Fig. 1 übertrieben dargestellt ist. Bezüglich der weiteren Merkmale des Sägeblatts 1 wird auf die vorangehenden Ausführungen sowie die in Fig. 1 eingezeichneten Bezugszeichen verwiesen. Das Verhältnis der Einsätze 4 zur Höhe des gesamten Zahns 10 von der Spitze bis zum Zahngrund 13 beträgt etwa 1:5 bei einer Verzahnung von etwa 0,85-1,15 ZpZ (Zähne pro Zoll). Die Zahnteilung verändert sich von 0,85-1,15 ZpZ bis auf 3-4 ZpZ, wobei sich die Größe der Einsätze 4 im Gegenzug nur etwa im Verhältnis 1:2 halbiert.

In **Fig. 7** ist eine weitere Ausführungsform des Sägeblatts 1 im Maßstab 1:1 dargestellt. Um dennoch die Merkmale der Ausbildung der Spitze des Zahns 10 besser erkennbar zu machen, ist der entsprechende Bereich eines der Zähne 10 in Fig. 7 in vergrößerter Darstellung wiedergegeben. Im Unterschied zu den vorangehend beschriebenen Ausführungsformen des Sägeblatts 1 besitzt dieses im Bereich seiner Vorsprünge 3 keine Einsätze, sondern die Zähne 10 mit Schneide 6, Spanbildungsfläche 7 und Spanumformelement 8 wurden unmittelbar am Zahn 10 - insbesondere durch Schleifen - angebracht. Es kann sich z. B. um ein Bimetallsägeblatt handeln.

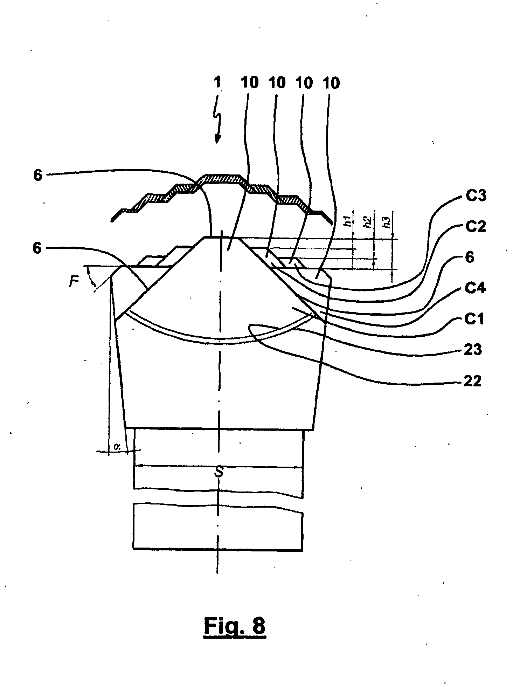

**Fig. 8** zeigt eine ähnliche Ansicht des Sägeblatts 1 wie Fig. 1, wobei hier durch die zeichnerische Darstellung der beiden kreisförmigen Linien 22, 23 versucht wurde, die eigentliche Geometrie des Zahns 10 in diesem Bereich besser zu erläutern. Die kreisförmigen Linien 22, 23 entstehen durch den Radius der Schleifscheibe, die zum Ausbilden der Spanbildungsfläche 7 und des Spanumformelements 8 bevorzugt benutzt wird. Durch diese kreisförmige Ausbildung werden die Späne beim Sägen in die Mitte des Schnittkanals gedrängt, wodurch die Gefahr der Beschädigung der Oberfläche im Schnittkanal weiter reduziert wird.

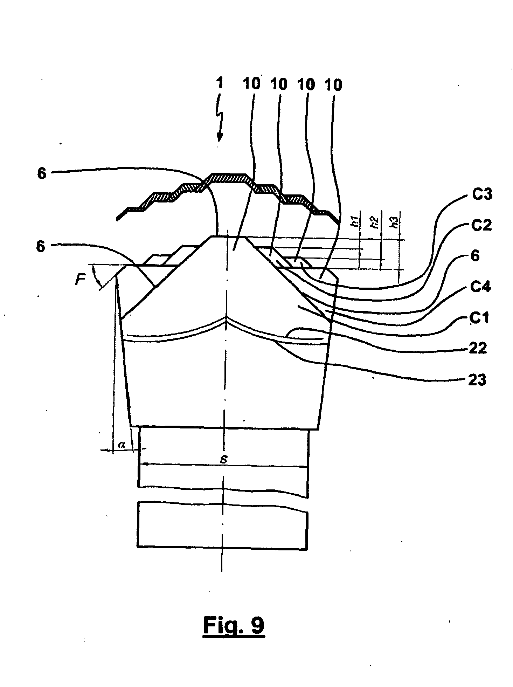

**Fig. 9** zeigt schließlich eine ähnliche Ansicht des Sägeblatts 1 wie die Fig. 1 und 8, wobei hier wiederum durch die zeichnerische Darstellung der beiden kreisförmigen Linien 22, 23 versucht wurde, die eigentliche Geometrie des Zahns 10 in diesem Bereich besser zu erläutern. Die kreisförmigen Linien 22, 23 entstehen durch den Radius der Schleifscheibe, die zum Ausbilden der Spanbildungsfläche 7 und des Spanumformelements 8 bevorzugt benutzt wird. In diesem Beispiel wurde das Spanumformelement 8 mit zwei Schliffen hergestellt. Es könnten jedoch auch mehr als zwei Schliffe angebracht werden.

### BEZUGSZEICHENLISTE

- 1: Sägeblatt
- 2: Grundkörper
- 3: Vorsprung
- 4: Einsatz
- 5: Fügefläche
- 6: Schneide
- 7: Spanbildungsfläche
- 8: Spanumformelement
- 9: bogenförmiger Abschnitt
- 10: Zahn
- 11: Zahnrücken
- 12: Zahnbrust
- 13: Zahngrund
- 14: Freifläche
- 15: geradliniger Abschnitt
- 16: Übergangsbereich
- 17: erster Übergangsbereich
- 18: erster geradliniger Abschnitt
- 19: zweiter Übergangsbereich
- 20: zweiter geradliniger Abschnitt
- 21: bogenförmige Fläche
- 22: Linie
- 23: Linie

## Patentansprüche

1. Sägeblatt (1), mit
einem Grundkörper (2),
einer Mehrzahl von an den Grundkörper (2) anschließenden Zähnen (10) mit einer Schneide (6) und einer Spanbildungsfläche (7), wobei zumindest ein Teil der Zähne (10) in einer sich entlang des Grundkörpers (2) wiederholenden Gruppe angeordnet ist, wobei die Gruppe mindestens drei ungeschränkte Zähne (10) mit unterschiedlichen Breiten aufweist, **dadurch gekennzeichnet, dass**
der breiteste Zahn (10) in der Gruppe kein Spanumformelement (8) aufweist, das von der Schneide (6) abgewandt an die Spanbildungsfläche (7) anschließt, und
mindestens ein anderer Zahn (10) in der Gruppe ein Spanumformelement (8) aufweist, das von der Schneide (6) abgewandt an die Spanbildungsfläche (7) anschließt.

2. Sägeblatt (1) nach Anspruch 1, **dadurch gekennzeichnet, dass** auch die anderen Zähne (10) in der Gruppe mit Ausnahme des breitesten Zahns (10) in der Gruppe jeweils ein Spanumformelement (8) aufweisen.

3. Sägeblatt (1) nach Anspruch 1 oder 2, **dadurch gekennzeichnet, dass** der Grundkörper (2) eine Mehrzahl von Vorsprüngen (3) aufweist, an denen jeweils ein Einsatz (4) aus einem Material befestigt ist, das härter als das Material der Vorsprünge (3) und des Grundkörpers (2) ist, und so die Zähne (10) gebildet werden, wobei die Schneide (6) und die Spanbildungsfläche (7) an dem Einsatz (4) angeordnet sind.

4. Sägeblatt (1) nach Anspruch 3, **dadurch gekennzeichnet, dass** das Spanumformelement (8) an dem Einsatz (4) angeordnet ist.

5. Sägeblatt (1) nach mindestens einem der vorhergehenden Ansprüche, **dadurch gekennzeichnet, dass** das Spanumformelement (8) eine stufenförmige Fläche aufweist.

6. Sägeblatt (1) nach mindestens einem der vorhergehenden Ansprüche, **dadurch gekennzeichnet, dass** das Spanumformelement (8) eine gekrümmte Fläche aufweist.

7. Sägeblatt (1) nach mindestens einem der vorhergehenden Ansprüche, **dadurch gekennzeichnet, dass** das Spanumformelement (8) eine gerade Fläche aufweist.

8. Sägeblatt (1) nach mindestens einem der vorhergehenden Ansprüche, **dadurch gekennzeichnet, dass** die Zähne (10) in der Gruppe unterschiedliche Höhen und Breiten aufweisen, wobei der breiteste und niedrigste Zahn (10) in der Gruppe kein Spanumformelement (8) aufweist.

9. Sägeblatt (1) nach mindestens einem der vorhergehenden Ansprüche, **dadurch gekennzeichnet, dass** das Sägeblatt (1) ein Sägeband ist.

10. Sägeblatt (1) nach mindestens einem der vorhergehenden Ansprüche, **dadurch gekennzeichnet, dass** das Sägeblatt (1) zum Sägen von Metall ausgebildet ist.

## Claims

1. A saw blade (1), comprising
a base body (2),
a plurality of teeth (10) being connected to the base body (2), the teeth (10) including a cutting portion (6) and a chip producing surface (7), at least a part of the teeth (10) being arranged in a group being repeatedly arranged along the base body (2), the group including at least three unset teeth (10) having different widths, **characterised in that**
the broadest tooth (10) in the group does not include a chip deforming element (8) being located next to the chip producing surface (7) in a direction facing away from the cutting portion (6), and
at least one other tooth (10) in the group includes a chip deforming element (8) being located next to the chip producing surface (7) in a direction facing away from the cutting portion (6).

2. The saw blade (1) of claim 1, **characterised in that** the other teeth (10) in the group with the exception of the broadest tooth (10) in the group each include a chip deforming element (8).

3. The saw blade (1) of claim 1 or 2, **characterised in that** the base body (2) includes a plurality of protrusions (3) each being connected to an insert (4) being made of a material which is harder than the material of the protrusions (3) and of the base body (2), and the teeth (10) are formed in this way, the cutting portion (6) and the chip producing surface (7) being arranged at the insert (4).

4. The saw blade (1) of claim 3, **characterised in that** the chip deforming element (8) is arranged at the insert (4).

5. The saw blade (1) of at least one of the preceding claims, **characterised in that** the chip deforming element (8) includes a surface having the shape of a step.

6. The saw blade (1) of at least one of the preceding claims, **characterised in that** the chip deforming element (8) includes a curved surface.

7. The saw blade (1) of at least one of the preceding claims, **characterised in that** the chip deforming element (8) includes a straight surface.

8. The saw blade (1) of at least one of the preceding claims, **characterised in that** the teeth (10) in the group have different heights and widths, the broadest and lowest tooth (10) in the group not including a chip deforming element (8).

9. The saw blade (1) of at least one of the preceding claims, **characterised in that** the saw blade (1) is a saw band.

10. The saw blade (1) of at least one of the preceding claims, **characterised in that** the saw blade (1) is designed for sawing metal.

## Revendications

1. Lame de scie (1), comportant
un corps de base (2),
une pluralité de dents (10) adjacentes au corps de base (2) et munies d'un tranchant (6) et d'une surface de formation de copeaux (7), au moins une partie des dents (10) étant agencées en un groupe se répétant le long du corps de base (2), ledit groupe comportant au moins trois dents (10) non avoyées avec des largeurs différentes, **caractérisée en ce que**
la dent (10) la plus large dans le groupe ne comporte pas d'élément de déformation des copeaux (8), adjacent à la surface de formation de copeaux (7) et détourné du tranchant (6), et
au moins une autre dent (10) dans le groupe comporte un élément de déformation des copeaux (8) adjacent à la surface de formation de copeaux (7) et détourné du tranchant (6).

2. Lame de scie (1) selon la revendication 1, **caractérisée en ce que** les autres dents (10) dans le groupe, à l'exception de la dent (10) la plus large dans le groupe, comportent également chacune un élément de déformation des copeaux (8).

3. Lame de scie (1) selon la revendication 1 ou 2, **caractérisée en ce que** le corps de base (2) comporte une pluralité de saillies (3), sur chacune desquelles est fixé un élément rapporté (4) réalisé dans un matériau plus dur que le matériau des saillies (3) et du corps de base (2), et de cette manière sont formées les dents (10), le tranchant (6) et la surface de formation de copeaux (7) étant disposés sur l'élément rapporté (4).

4. Lame de scie (1) selon la revendication 3, **caractérisée en ce que** l'élément de déformation des copeaux (8) est disposé sur l'élément rapporté (4).

5. Lame de scie (1) selon au moins l'une quelconque des revendications précédentes, **caractérisée en ce que** l'élément de déformation des copeaux (8) comporte une surface discontinue.

6. Lame de scie (1) selon au moins l'une quelconque des revendications précédentes, **caractérisée en ce que** l'élément de déformation des copeaux (8) comporte une surface courbe.

7. Lame de scie (1) selon au moins l'une quelconque des revendications précédentes, **caractérisée en ce que** l'élément de déformation des copeaux (8) comporte une surface droite.

8. Lame de scie (1) selon au moins l'une quelconque des revendications précédentes, **caractérisée en ce que** les dents (10) dans le groupe ont des hauteurs et des largeurs différentes, la dent (10) la plus large et la plus haute dans le groupe n'étant pas munie d'un élément de déformation des copeaux (8).

9. Lame de scie (1) selon au moins l'une quelconque des revendications précédentes, **caractérisée en ce que** ladite lame de scie (1) est un ruban de scie.

10. Lame de scie (1) selon au moins l'une quelconque des revendications précédentes, **caractérisée en ce que** ladite lame de scie (1) est réalisée pour scier du métal.
